Europäisches Patentamt

European Patent Office

Office européen des brevets

(11) Publication number: **0 112 105**
**B1**

(12) **EUROPEAN PATENT SPECIFICATION**

(45) Date of publication of patent specification: **26.08.87**

(21) Application number: **83307361.2**

(22) Date of filing: **02.12.83**

(51) Int. Cl.⁴: **G 01 F 23/18**

(54) Fluidised bed level measurement.

(30) Priority: **16.12.82 US 450508**

(43) Date of publication of application:
**27.06.84 Bulletin 84/26**

(45) Publication of the grant of the patent:
**26.08.87 Bulletin 87/35**

(84) Designated Contracting States:
**DE FR GB IT SE**

(56) References cited:
**DE-A-2 452 655**
**DE-A-2 806 672**
**DE-A-3 039 210**

(73) Proprietor: **THE BABCOCK & WILCOX COMPANY**
**1010 Common Street P.O. Box 60035**
**New Orleans Louisiana 70160 (US)**

(72) Inventor: **Dziubakowski, Donald J.**
**7650 Walnutwood Drive**
**Seven Hills Ohio 44131 (US)**
Inventor: **Smith, John William**
**227 Sheri Avenue**
**Massillon Ohio 44646 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to systems for measuring the level within a fluidised bed.

Various methods have been utilised to determine the level within a fluidised bed. Typically, such methods require the use of a multiplicity of pressure sensors connected to pressure sensing taps located a small distance apart. The pressure sensors above the level of the bed sense approximately the same pressure. If a pressure sensor senses a pressure higher than that sensed by the pressure sensor immediately above it, then it is known that the top of the bed is between these two pressure sensors. The foregoing method has many inherent disadvantages in that a large number of pressure sensors, taps, and sensing lines are required, and the resolution of the system is determined by the distance between adjacent pressure sensing taps.

Because of the foregoing, it has become desirable to develop a system which accurately determines the level within a fluidised bed with a minimum number of pressure sensors.

German Patent Application Publication No. DE—A—3 039 210 discloses a system for determining the level within a fluidised bed, the system comprising first pressure sensing means positioned adjacent the bottom of the fluidised bed, second pressure sensing means positioned above the top surface of the fluidised bed, third pressure sensing means positioned between the first and second pressure sensing means so as to be within the fluidised bed, and means for producing a signal dependent on the level of the fluidised bed in response to the first, second and third pressure sensing means. The system also includes a fourth pressure sensing means located between the second and third pressure sensing means. The pressure differential between the first and second (bottom and top) sensing means is used for processing, as is the pressure differential between the third and fourth (intermediate) sensing means. Thus in order to obtain a determination of fluidised bed level, four sensing means need to be provided.

US Patent No. US—A—4 193 303 discloses a similar level sensing system to that of DE—A—3 039 210, but with specific reference to level measurement of liquids. Again, the difference in pressure between two intermediate sensors at fixed levels below the highest permitted level is utilised to provide a determination of level.

US Patent No. US—A—4 006 635 discloses a liquid level measuring system in which two hydrostatic probes are used to spray a neutral gas into a tank for the liquid, one emerging near the bottom of the tank and one being provided towards the top slightly below the maximum filling level. Pressure measurements are taken at the outlets of these probes as well as at further level sensing pick ups. The pressure measurement at the bottom of the tank and one of the pressure measurements further up the tank are utilised to provide the required liquid level information.

According to the present invention there is provided a system for determining the level within a fluidised bed, the system comprising first pressure sensing means positioned adjacent the bottom of the fluidised bed, second pressure sensing means positioned above the top surface of the fluidised bed, third pressure sensing means positioned between the first and second pressure sensing means so as to be within the fluidised bed, and means for producing a signal dependent on the level of the fluidised bed in response to the first, second and third pressure sensing means, wherein the first, second and third pressure sensing means are operative to produce signals indicative of the pressure existing at each of their respective sensing positions, and the signal producing means is operative to process the pressure signals to produce a signal representative of the level of the fluidised bed, in such a manner that the level representative signal is directly proportional to the difference between the respective signals from the first and second pressure sensing means and is inversely proportional to the difference between the respective signals from the first and third pressure sensing means, the third pressure sensing means being at a known height above the first pressure sensing means.

A preferred embodiment of the present invention described hereinbelow seeks to solve or at least alleviate the aforementioned problems associated with the prior art by utilising a minimum number of pressure sensors to determine the level of a fluidised bed. Pressure sensors are located at the base of the bed, at approximately 2.44 m (eight feet) above the distributor plate, and at one or more intermediate locations therebetween. Inasmuch as the change in pressure within the fluidised bed is approximately linear with respect to bed height, and since this change in pressure is much greater within the fluidised bed than above the bed, the foregoing measurements can be utilised in the standard straight line equation of $y = mx + b$ to determine the level of the fluidised bed. The foregoing is accomplished by the use of function blocks in a specific logic arrangement to produce an output signal representative of the depth of the fluidised bed.

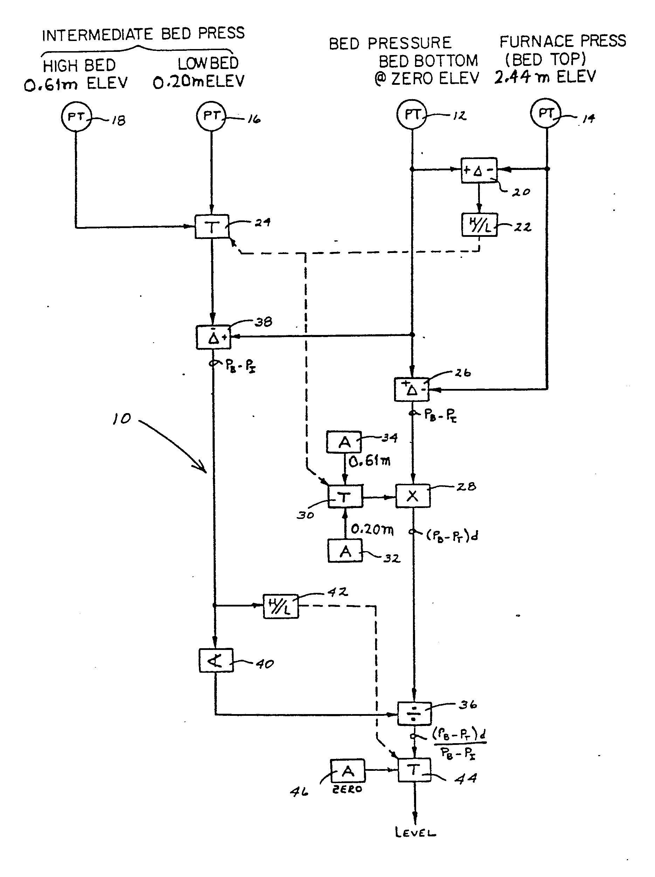

The invention will now be further described, by way of illustrative and non-limiting example, with reference to the accompanying drawing, the sole figure of which is a schematic diagram of the logic arrangement of a system embodying the invention for determining the level within a fluidised bed.

The sole figure of the drawing is a schematic diagram of a logic circuit 10 utilised for determining the level of a fluidised bed. The figure shows four pressure transmitters 12, 14, 16 and 18 for measuring pressure at various levels within the bed. For example, the pressure transmitter 12 measures the pressure at the base of the bed, the pressure transmitter 16 measures the pressure at approximately 0.20 m (8 in) above a distributor plate, the pressure transmitter 18 measures the pressure at approximately 0.61 m (2 ft) above the distributor plate and the pressure transmitter 14 measures the pressure at approximately 2.44 m (8 ft) above the distributor plate. Thus, only four pressure transmitters are required in order to determine the bed depth at any point within the fluidised bed.

The outputs of the pressure transmitters 12 and 14 are connected to positive and negative inputs, respectively, of a subtraction function block 20. An output signal produced by the subtraction function block 20 is representative of the difference in pressure from above the bed region to the bottom of the bed. This signal is applied to a high and low level detector 22 which is preset to actuate when the input signal applied thereto equals or exceeds a pressure of 7.47 kPa (30 inches of water), and resets when the input signal applied thereto is less than 7.47 kPa (30 inches of water). Thus, the level detector 22 produces a "high" output signal when the pressure difference between the bottom of the bed and the freeboard (above the bed) is equal to or greater than 7.47 kPa (30 inches of water) and produces a "low" output signal when the pressure difference between the bottom of the bed and the freeboard is less than 7.47 kPa (30 inches of water).

The output signal produced by the level detector 22 is used as an input signal to a transfer switch 24 whose other inputs are the output signals produced by the pressure transmitters 16 and 18. The transfer switch 24 is actuated in response to the output signal of the level detector 22. Thus, when the output signal of the level detector 22 is "high", thus indicating that the difference in pressure from the bottom of the bed and the freeboard is equal to or greater than 7.47 kPa (30 inches of water), the transfer switch 24 connects the pressure transmitter 18 into the logic circuit 10. In contrast, when the output signal of the level detector 22 is "low", thus indicating that the difference in pressure between the bottom of the bed and the freeboard is less than 7.47 kPa (30 inches of water), the transfer switch 24 connects the pressure transmitter 16 into the logic circuit 10.

The outputs of the pressure transmitters 12 and 14 are also connected to positive and negative inputs, respectively, of a subtraction function block 26. An output signal produced by the subtraction function block 26 is representative of the difference in pressure between the bottom of the bed and the freeboard, i.e. $(P_B - P_T)$. This output signal is used as an input signal to a multiplication function block 28 hereinafter described.

The output signal produced by the level detector 22 is also used as an input signal to a transfer switch 30 whose other inputs are from fixed function blocks 32 and 34. The fixed function blocks 32 and 34 are representative of a distance (d), which is the elevation of the respective pressure transmitter within the bed. As such, the fixed function block 32 is representative of the value $d = 0.20$ m (8 in), which is the approximate elevation of the pressure transmitter 16 with respect to the distributor plate, whereas the fixed function block 34 is representative of the value

$d = 0.61$ m (24 in), which is the approximate elevation of the pressure transmitter 18 with respect to the distributor plate. An output of the transfer switch 30 is used as the other input to the multiplication function block 28. An output signal produced by the multiplication function block 28 is the function $(P_B - P_T)d$, which represents the numerator in a desired equation $X = (P_b - P_T)d/(P_B - P_I)$, where X is the bed height. This output signal is used as an input signal to a division function block 36 whose operation will be hereinafter described.

The outputs of the pressure transmitter 12 and the transfer switch 24 are connected to positive and negative inputs, respectively, of a subtraction function block 38. An output signal produced by the subtraction function block 38 is the difference between the pressure at the bottom of the bed and the pressure at intermediate locations within the bed and is representative of the function $(P_B - P_I)$ which is the denominator in the foregoing desired equation. This output signal is applied as an input signal to a low limit function block 40 whose output is connected to the other input to the division function block 36. The low limit function block 40 prevents the output of the division function block 36 from approaching infinity as the expression $(P_B - P_I)$ becomes incrementally smaller. The output signal produced by the division function block 36 represents X, the unknown bed height, and is equal to $(P_B - P_T)d/(P_B - P_I)$.

As previously mentioned, the low limit function block 40 prevents the division function block 36 from producing an output signal that approaches infinity. As such, this low limit function block acts in conjunction with a high and low level detector 42 which is operable when the output signal produced by the function block 38 is less than 0.747 kPa (3 inches of water). When this occurs, the high and low level detector 42 produces an output signal which is used as an input signal to a transfer switch 44 which receives another input signal which is the output signal produced by the division function block 36. A fixed function block 46 representative of zero bed height is connected to the transfer switch 44. During normal operation, the transfer switch 44 permits the signal representative of the bed height X and determined by the equation $(P_B - P_T)d/(P_B - P_I)$ to be transmitted therethrough. However, if the high and low level detector 42 determines that the pressure difference between the bottom of the bed and any intermediate tap is less than 0.747 kPa (3 inches of water), the transfer switch 44 allows the signal representative of zero bed height to be transmitted therethrough.

In operation, at "start-up", the pressure transmitters 12 and 14 sense the pressures at the bottom of the bed and at approximately 2.44 m (8 feet) above the distributor plate, respectively. These pressure signals are transmitted to the subtraction function block 20 which produces an output signal representative of the difference in pressure between these two reference points.

Typically, at "start-up", this difference in pressure will be less than 7.47 kPa (30 inches of water). If this is the case, the transfer switch 24 will connect the pressure transmitter 16 into the logic circuit 10. When this occurs, the output of the subtraction block 38, which is representative of the difference between the pressure at the bed bottom and at the location of the pressure transmitter 16, is typically less than 0.747 kPa (3 inches of water). This low pressure difference causes the high and low level detector 42 to actuate which, in turn, causes the transfer switch 44 to allow the fixed function block 46 to pass a signal representative of zero bed height therethrough. As the bed height increases, the difference in pressure between the bed bottom and the pressure sensed by the pressure transmitter 16 will exceed 0.747 kPa (3 inches of water) causing the high and low level detector 42 to actuate the transfer switch 44 so as to disconnect the fixed function block 46 from the output of the logic circuit. During all of the foregoing, the transfer switch 30 has been actuated so as to cause the fixed function block 32, which is representative of the bed depth (d) for the pressure transmitter 16, to be connected to the multiplication function block 28, whose output is connected to the input to the division function block 36. The other input to the division function block 36 is the output of the subtraction function block 38 which causes the output of the division function block 26 to be the desired bed height X. Because of the actuation of the transfer switch 44, this desired bed height X also appears at the output thereof.

When the difference in pressure between the bed bottom and at approximately 2.44 m (8 feet) above the distributor plate equals or exceeds 7.47 kPa (30 inches of water), the high and low transmitter 22 causes the transfer switch 24 to connect the pressure transmitter 18 into the logic circuit 10. When this occurs, the transfer switch 30 also causes the fixed function block 34, which is representative of the bed depth d for the pressure transmitter 18, to be connected to the multiplication function block 28. Inasmuch as the pressure difference exceeds 0.747 kPa (3 inches of water), the transfer switch 44 is actuated so that the output of the division function block 36 is passed therethrough. Because of this, the division function block 36 produces the desired bed depth X at its output and this desired bed depth X also appears at the output of the transfer switch 44.

Even though the foregoing discussion was directed to the filling of the fluidised bed and the actuation of the components in response thereto, the components will operate in a similar manner either in a standard or dynamic environment. Thus, the logic circuit involved will produce an indication of bed depth under all operating conditions.

**Claims**

1. A system for determining the level within a fluidised bed, the system (10) comprising first pressure sensing means (12) positioned adjacent the bottom of the fluidised bed, second pressure sensing means (14) positioned above the top surface of the fluidised bed, third pressure sensing means (16) positioned between the first and second pressure sensing means (12, 14) so as to be within the fluidised bed, and means for producing a signal dependent on the level of the fluidised bed in response to the first, second and third pressure sensing means (12, 14, 16), wherein the first, second and third pressure sensing means (12, 14, 16) are operative to produce signals ($P_B$, $P_T$, $P_I$) indicative of the pressure existing at each of their respective sensing positions, and the signal producing means is operative to process the pressure signals to produce a signal representative of the level of the fluidised bed, in such a manner that the level representative signal is directly proportional to the difference between the respective signals from the first and second pressure sensing means (12, 14) and is inversely proportional to the difference between the respective signals from the first and third pressure sensing means (12, 16), the third pressure sensing means being at a known height above the first pressure sensing means.

2. A system according to claim 1, including a fourth pressure sensing means (18) located between the second and third pressure sensing means (14, 16) and operative to produce a signal indicative of the pressure at that location, and means (22, 24) for connecting the fourth pressure sensing means (18) to the signal producing means so as to replace the third pressure sensing means (16) in response to the fluidised bed reaching a predetermined level.

3. A system according to claim 1 or claim 2, including means (42, 44) for indicating a zero bed level when the level of the fluidised bed is below a predetermined level.

4. A system according to claim 3, wherein the means (42, 44) for indicating a zero bed level is responsive to the difference between the respective signals from the first and third pressure sensing means (12, 16) reaching a predetermined level.

5. A system according to any one of the preceding claims, including means (32) for establishing a signal indicative of the height of the third pressure sensing means (16) above the first pressure sensing means (12), whereby the level representative signal is directly proportional to the third sensing means height indicative signal and to the difference between the respective signals from the first and second pressure sensing means (12, 14) and is inversely proportional to the difference between the respective signals from the first and third pressure sensing means (12, 16).

6. A system according to claim 5 as dependent on claim 2, including means (34) for establishing a signal indicative of the height of the fourth pressure sensing means (18) above the first pressure sensing means (12), and means (30) for replacing the third sensing means height indicative signal by the fourth sensing means height indicative signal in response to the fuidised bed reaching the predetermined level.

**Patentansprüche**

1. System zum Bestimmen des Niveaus innerhalb eines Wirbelschichtbettes, wobei das System (10) erste Druckabfühlmittel (12) aufweist, die in der Nachbarschaft des Bodens des Wirbelschichtbettes angeordnet sind, zweite Druckabfühlmittel (14) aufweist, die über der oberen Fläche des Wirbelschichtbettes angeordnet sind, dritte Druckabfühlmittel (16) aufweist, die zwischen den ersten und zweiten Druckabfühlmitteln (12, 14) so angeordnet sind, daß sie sich innerhalb des Wirbelschichtbettes befinden, und Mittel aufweist zur Erzeugung eines Signals, welches von dem Niveau des Wirbelschichtbettes in Abhängigkeit von den ersten, zweiten und dritten Druckabfühlmitteln (12, 14, 16) abhängt, wobei die ersten, zweiten und dritten Druckabfühlmittel (12, 14, 16) wirksam sind, um Signale ($P_B$, $P_T$, $P_X$) zu erzeugen für die Angabe des Druckes, der jeweils an ihren betreffenden Abfühlpositionen herrscht, und das Signalerzeugungsmittel wirksam ist, um die Drucksignale zu verarbeiten und ein Signal kennzeichnend für das Niveau des Wirbelschichtbettes zu erzeugen in solcher Weise, daß das für das Niveau kennzeichnende Signal direkt proportional ist der Differenz zwischen den betreffenden Signalen aus den ersten und zweiten Druckabfühlmitteln (12, 14) und umgekehrt proportional ist zur Differenz zwischen den betreffenden Signalen aus den ersten und dritten Druckabfühlmitteln (12, 16), wobei das dritte Druckabfühlmittel sich in einer bekannten Höhe über dem ersten Druckabfühlmittel befindet.

2. System nach Anspruch 1, mit einem vierten Druckabfühlmittel (18), welches zwischen den zweiten und dritten Druckabfühlmitteln (14, 16) angeordnet und wirksam ist, um ein Signal zu erzeugen für die Angabe des Druckes an diesem Ort und mit Mitteln (22, 24) zum Verbinden des vierten Druckabfühlmittels (18) mit dem Signalerzeugungsmittel, um das dritte Druckabfühlmittel (16) in Abhängigkeit von dem Wirbelschichtbett zu ersetzen, welches ein vorbestimmtes Niveau erreicht.

3. System nach Anspruch 1 oder Anspruch 2, mit Mitteln (42, 44) für die Angabe eines Bettnullniveaus, wenn das Niveau des Wirbelschichtbettes unter einem vorbestimmten Niveau ist.

4. System nach Anspruch 3, wobei das Mittel (42, 44) für die Angabe eines Betnullniveaus auf die Differenz zwischen den betreffenden Signalen aus den ersten und dritten Druckabfühlmitteln (12, 16) anspricht, die ein vorbestimmtes Niveau erreichen.

5. System nach einem der vorhergehenden Ansprüche, mit Mitteln (32) zur Schaffung eines Signals für die Angabe der Höhe der dritten Druckabfühlmittel (16) über dem ersten Druckabfühlmittel (12), wobei das für das Niveau kennzeichnende Signal direkt proportional ist zu dem die Höhe anzeigenden Signal des dritten Abfühlmittels und zu der Differenz zwischen den betreffenden Signalen aus den ersten und zweiten Druckabfühlmitteln (12, 14) und umgekehrt proportional ist zur Differenz zwischen den entsprechenden Signalen aus den ersten und dritten Druckabfühlmitteln (12, 16).

6. System nach Anspruch 5, wenn abhängig von Anspruch 2, mit Mitteln (34) zur Schaffung eines Signales für die Angabe der Höhe des vierten Druckabfühlmittels (18) über dem ersten Druckabfühlmittel (12), und Mitteln (30) zum Ersetzen des die Höhe anzeigenden Signals der dritten Abfühlmittel durch das die Höhe anzeigende Signal des vierten Abfühlmittels unter Ansprechen auf das Wirbelschichtbett, welches das vorbestimmte Niveau erreicht.

**Revendications**

1. Système pour la détermination du niveau d'un lit fluidisé, le système (10) comprenant un premier moyen capteur de pression (12) placé près de la base du lit fluidisé, un second moyen capteur de pression (14) placé au-dessus de la surface supérieure du lit fluidisé, un troisième moyen capteur de pression (16) placé entre le premier et le second moyens capteurs de pression (12, 14) de façon à être entre les limites du lit fluidisé, et un moyen pour la production d'un signal dépendant du niveau du lit fluidisé en réponse aux premier, second et troisième moyens détecteurs de pression (12, 14, 16) dans lequel les premier, second et troisième moyens capteurs de pression (12, 14, 16) assurent la production de signaux (Pa, Pn, Px) indicatifs de la pression existant en chacun des emplacements de détection respectifs, et le moyen de production de signal assure le traitement des signaux de pression pour produire un signal représentatif du niveau du lit fluidisé, de manière telle que le signal représentatif de niveau est directement proportionnel à la différence entre les signaux émanant respectivement des premier et second moyens capteurs de pression (12, 14) et est inversement proportionnel à la différence entre les signaux émanant respectivement des premier et troisième moyens détecteurs de pression (12, 16), le troisième moyen capteur de pression étant à une hauteur connue au-dessus du premier moyen détecteur de pression.

2. Système selon la revendication 1, comportant un quatrième moyen capteur de pression (18) situé entre les second et troisième moyens capteurs de pression (14, 16) et assurant la production d'un signal indicatif de la pression régnant à son emplacement, et des moyens (22, 24) propres à relier le quatrième moyen capteur de pression (18) au moyen de production de signal de façon à remplacer le troisième moyen capteur de pression (16) en réponse à l'accession du lit fluidisé à un niveau prédéterminé.

3. Système selon la revendication 1 ou la revendication 2, comportant un moyen (42, 44) propre à indiquer un niveau de lit nul quand le niveau du lit fluidisé est inférieur à un niveau prédéterminé.

4. Système selon la revendication 3, dans lequel le moyen (42, 44) propre à indiquer un niveau de lit nul est sensible à l'accession à un niveau déterminé de la différence entre les signaux émanant respectivement des premier et troisième moyen capteurs de pression (12, 16).

5. Système selon l'une quelconque des revendications précédentes, comportant un moyen (32) pour l'établissement d'un signal indicatif de la hauteur du troisième moyen capteur de pression (16) au-dessus du premier moyen capteur de pression (12), de sorte que le signal représentatif de niveau est directement proportionnel au signal indicatif de hauteur du troisième moyen capteur et à la différence entre les signaux émanant respectivement des premier et second moyens capteurs de niveau (12, 14) et est inversement proportionnel à la différence entre les signaux émanant respectivement des premier et troisième moyens capteurs de pression (12, 16).

6. Système selon les revendications 2 et 5, comportant un moyen (34) pour l'établissement d'un signal indicatif de la hauteur du quatrième moyen capteur de pression (18) au-dessus du premier moyen capteur de pression (12), et un moyen (30) propre à remplacer le signal indicatif de hauteur du troisième moyen capteur par le signal indicatif de hauteur du quatrième moyen capteur en réponse à l'accession du lit fluidisé au niveau prédéterminé.